# EUROPEAN PATENT APPLICATION

(11) **EP 0 714 598 A1**
(43) Date of publication of application: **05.06.1996**
(21) Application number: 95919465.5
(22) Date of filing: 01.06.1995
(51) Int. Cl.: A01K 23/00

(54) **DEVICE TO HOLD ELASTIC BAGS TO THE DOG BODY FOR THE COLLECTION OF EXCREMENTS**

(30) Priority: 03.06.1994 ES 9400121
(71) Applicant: CREMADES MARTINEZ, Francisco, E-30564 Lorqui (ES); Culianez Perez, Manuel, E-30564 Lorqui (ES)
(72) Inventor: CREMADES MARTINEZ, Francisco, E-30564 Lorqui (ES); Culianez Perez, Manuel, E-30564 Lorqui (ES)
(74) Representative: Perez Bonal, Bernardo
(86) International application number: ES9500066
(87) International publication number: WO9533368

(57) **Abstract**

Bag for receiving the excrements and harness for fixing the collection assembly to the dog's body, the harness being provided with adjustable buckles for receiving the ends of the belt (1) which are associated through a laminar belt closed upon itself by means of a central buckle (5) wherein is fastened the upper belt of the supporting harness (12) which presents a bifurcation from the upper belt and determines two side prolongations (7) defining a central opening provided for the tail of the animal (6) and an outlet for the excrements; two adjustable lower belts (8) extend from the supporting harness, and anchoring means (9) are provided to attach the bag (4) to the supporting harness.

## Description

### OBJECT OF THE INVENTION

This invention consists of a portable device, to hold elastic bags, for the direct collection of excrements, arranged attached to the rear part of the animal, made up of a webbing assembly and disposable bag attached by suitable holding means that make it possible for the animal to defecate inside the bag, thus preventing the uncontrolled defecation of the animal either outdoors or indoors.

### BACKGROUND OF THE INVENTION

There are currently known some devices used to collect dog excrements after they have been deposited on the street.

Mechanical or manual means incorporating a disposable bag into which the excrements are introduced are normally used to carry out this operation, which is certainly unpleasant for most people.

It is generally impossible to prevent the uncontrolled defecation of a dog in public places, resulting in soiled streets, which must later be cleaned up, which results in a considerable inconvenience to the owner of the animal or to the council cleaning services.

The inconvenience of this situation, as well as the fact that it is necessary to take the animal out so that it may effect its physiological needs, makes viable the usage of a portable system for the direct collection of dog excrements.

Some systems are already known which consist of a portable receptacle made up of a main bag and a webbing set fitted along the body of the animal, with its corresponding elastic length adjustment and hooking and fastening means, but they do present a certain assembly complexity and do not fully guarantee a fit firm enough to prevent the assembly from coming loose or being displaced.

### DESCRIPTION OF THE INVENTION

The device covered by this invention consists on a strap with adjustable buckles associated by way of a laminar band looped upon itself, with a central buckle, to which the upper strap is fastened, which presents a part with a central opening, or which directly splits into two separate branches, in order to leave a passage for the tail of the animal and an excrement outlet, as well as two lower adjustable straps, fitted below or as an extension of this central opening part, attachable to the supporting strap by way of buckles.

The means to attach the bag to the supporting webbing assembly consist of raised flaps, deployed opened up and arranged upon the side branches of the central part, with perimetric latching and one or more clasping pins used to secure the free ends of the bag, as well as one or more bridging pieces located between those flaps and an extensible strap used to attach the supporting webbing assembly to the front collar piece of the animal.

Correspondingly, in respect of the genitals of bitches, to be used during the mating season, the branching is conveniently extended and the elastic bag is arranged to fit the new shape and size of the opening, in order to discharge the double utility of excrement collection and genital protection.

### DESCRIPTION OF THE DRAWINGS

In order to complement the description being effected and with the aim of aiding towards a better understanding of the features of the invention, this patent specification is accompanied, as an integral part thereof, by a set of drawings where, with a character merely illustrative but not limitative, the following has been duly represented:
Figure 1.- Represents a perspective view of the dog excrement collection system.

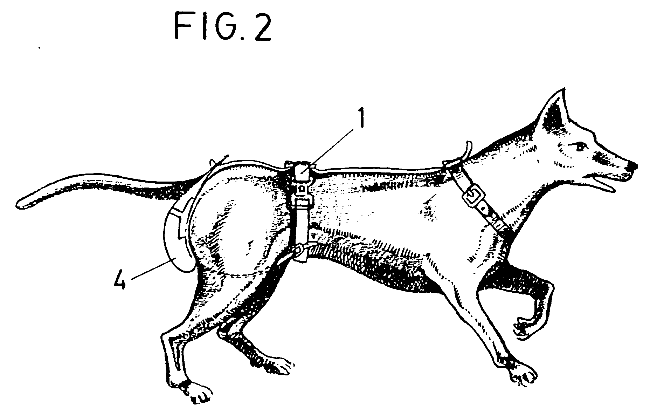

Figure 2.- Represents a profile view of the dog excrement collection system attached to an illustrated dog.

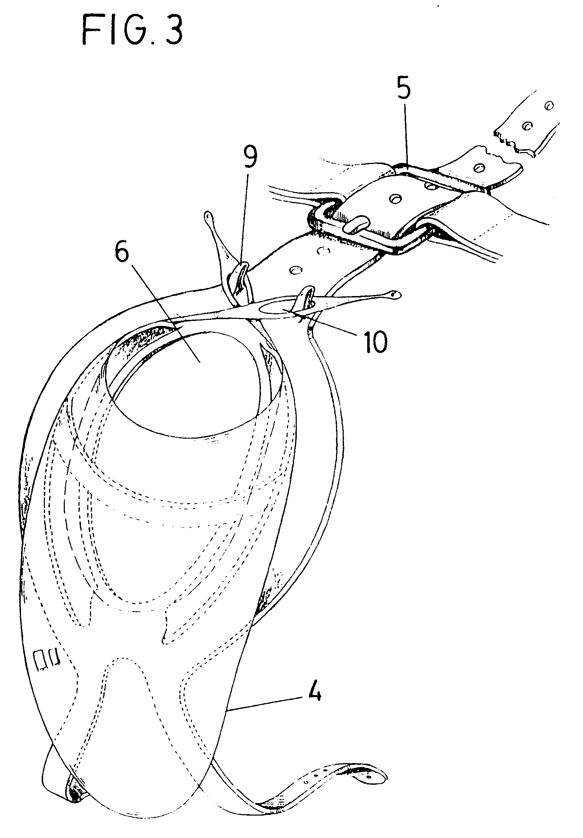

Figure 3.- Represents a perspective view of the assembly of the collection bag upon the supporting webbing.

### PREFERRED EXECUTION OF THE INVENTION

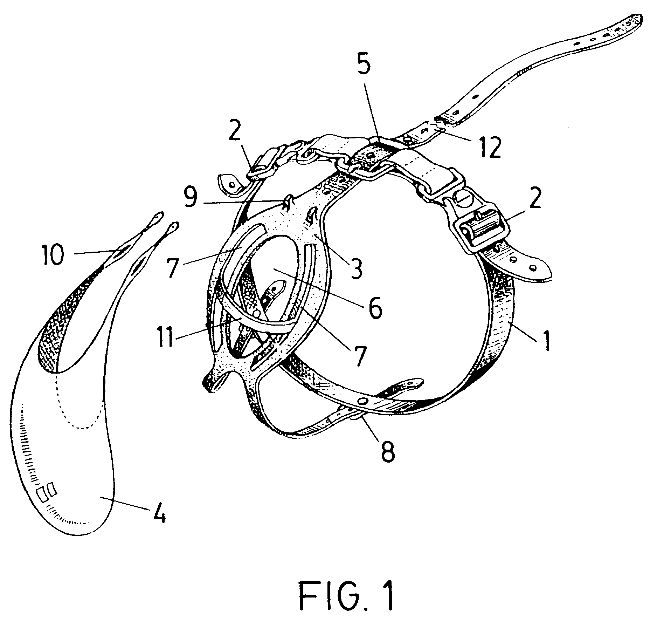

Upon examining the figures (Fig. 1) it may be observed that the dog excrement collection system consists of a supporting strap (1) attached to the dog waist, fitted with two clipping buckles (2) adjustable on both side to secure the strap by its two ends, being then attached to a supporting strap (3) fitted with means to fit the excrement bag (4).

Each one of the buckles (2) have openings associated to the metal buckle (5) of the supporting strap (3) by way of laminar bands looped upon themselves.

The supporting webbing (3) has an upper strap or band (12), extending from the former or adapted to it, as a function of the size of the dog, with the help of a metal buckle (5), the strap (12) can be extensible to enable the attachment of the harness to the upper collar piece.

The supporting webbing (3) extends to form two side branches that determine an elliptically shaped internal opening (6) arranged so as to allow the passage of the dog tail and the outlet of its excrements, being the side branches fitted with deployed flaps (7) where the excrement bag (4) is latched.

Two straps, attached below the supporting webbing, or as an extension thereof, are arranged so that they can be adjusted by way of metal buckles (8) located below the supporting webbing (1).

In the area corresponding to that where the supporting webbing branches out into the two side extensions there are clasping pins (9) to hook the holes (10) practiced for that purpose onto the end extensions of the excrement bag (4). Furthermore, and in order to facilitate the opening of the bag when it is placed upon the supporting webbing (3), one or more bridging pieces (11) may be optionally arranged across the flaps (7) or alternatively, only the initial sections of said bridging pieces, formed by small curvilinear ribs, may be so placed.

Bag (4) attachment is achieved placing its internal perimetric edge around the flaps (7) and then pulling each of the end extensions of the bag, containing the clasp hooking holes (10) until each one of the holes (10) is hooked onto the corresponding clasp (9), thus achieving a proper attachment of the bag, preventing its falling off the webbing whenever the animal makes any sudden movements.

It is also possible to incorporate accessories so that they may be adapted to the genitals of the bitches and attached to the supporting webbing, in order to prevent them from mating during the mating season.

It is not considered necessary to extend this description any further in order to enable any expert in the subject to understand the scope of the invention and the advantages derived therefrom.

The materials, shape, size and arrangement of the elements may be varied as long as any such variation does not alter the essentiality of the invention.

The terms in which this specification has been written must always be interpreted in a wide and non limitative sense.

## Claims

1. Device to hold elastic bags to the dog body for the collection of excrements, of those fitted with a bag to receive the excrements and later disposal of same and a webbing assembly allowing its attachment to the rear of the animal, essentially characterized because it is based on a strap to secure it to the waist of the dog with its corresponding adjustable buckles to attach the ends of the strap, buckles that are associated by way of a laminar band looped upon itself to a central buckle, to which it clasped the upper strap of the supporting webbing, presenting said supporting webbing a branching from the upper strap that determines two side extensions defining a central opening permitting the passage of the dog tail and the outlet of excrements, deriving the supporting webbing then into two adjustable lower straps that can be buckled to the supporting webbing, having further integrated means to latch the bag to the supporting webbing.

2. Device to hold elastic bags to the dog body for the collection of excrements, as per prior claims, characterized in that the means used to attach the bag to the supporting webbing consist of opened-up flaps, arranged upon the side extensions of the supporting webbing for the attachment of the excrement bag through the contact of the internal perimetric edge corresponding to the opening of the bag, as well as by way of one or more hooking clasps located upon the branching of the supporting webbing to hook one or more corresponding holes practiced into the excrement bag, being said holes located in its upper extensions, near the attachment ends of the bag.

3. Device to hold elastic bags to the dog body for the collection of excrements, as per prior claims, characterized in that the excrement bag is made of elastic material and is of an appropriate size, so that it creates a pulling force in respect of its coupling upon the supporting webbing that allows its attachment thereon.

4. Device to hold elastic bags to the dog body for the collection of excrements, as per prior claims, characterized in that one or more bridging pieces may be arranged across the flaps located on the side extensions of the supporting webbing to ease the opening of the bag, being it also possible to only arrange one or two of the end sections of said bridging pieces consisting in small curved ribs that extend from the flaps without contacting each other, determining an open space between them.

5. Device to hold elastic bags to the dog body for the collection of excrements, as per prior claims, characterized in that an extensible strap may be fitted to attach the supporting webbing to the upper collar piece of the animal.

6. Device to hold elastic bags to the dog body for the collection of excrements, as per prior claims, characterized in that accessories of a proper configuration may be duly fitted to the harness, located in correspondence with the genitals of bitches for their use during the mating season.
